# EUROPEAN PATENT SPECIFICATION

(11) **EP 2 227 892 B1**
(45) Date of publication and mention of the grant of the patent: **08.08.2018**
(21) Application number: 08705072.0
(22) Date of filing: 03.01.2008
(51) Int. Cl.: H04L 29/08

(54) **SYSTEM AND METHOD OF RETRIEVING A SERVICE CONTACT IDENTIFIER**
VORRICHTUNG UND VERFAHREN ZUM ABRUFEN EINER DIENSTKONTAKTIDENTIFIZIERUNG
SYSTÈME ET PROCÉDÉ POUR RÉCUPÉRER UN IDENTIFIANT DE CONTACT DE SERVICE

(43) Date of publication of application: 15.09.2010
(73) Proprietor: Scipioo Holding B.V., 4874 LV Etten-Leur (NL)
(72) Inventor: BENSCHOP, Dirk Leonard, NL-4874 LV Etten-leur (NL); BENSCHOP, Henderik Reinout, NL-3181 NM Rozenburg (NL)
(74) Representative: De Vries & Metman
(86) International application number: PCT/NL2008/050003
(87) International publication number: WO 2009/084951

(56) References cited:
- EP-A- 0 479 660
- US-A1- 2002 095 488
- US-A1- 2006 020 692

## Description

### FIELD OF THE INVENTION

The invention relates to the field of (electronic) services. More specifically, the invention relates to the field of obtaining information to allow use of a particular service.

### BACKGROUND OF THE INVENTION

The use of communication devices for (electronic) services has become very popul ar in the last two decades. Mobile telephony and electronic banking are examples of electronic services that heavily penetrated the daily life of people. Other examples include electronic mail and use of the internet, such as visiting web pages with information, participating in electronic friends networks and contributing to web discussions. Other services relate to regular mail delivery and electronic route navi gation.

The ever increasing possibilities of electronic services go along with a significant amount of information people need to possess to make use of these electronic services. As a typical example, one needs to know a telephone nurrber for contacting another person by tel ephone, an e-mail address to send an e-mail to this same person, an uniform resource locator (URL) to visit the website of this person, a bank account number to wire money to the bank account of this person etc. Moreover, in order to have a package or letter delivered by regul ar mail, one needs to know the delivery address. Furthermore, in order to make use of a route navigation servi ce, one needs to know details about the destination location.

Thus, the variety of available services requires users of these services to possess specific service contact details of an intended recipient of these services.

In the prior art, attempts have been made to bring a variety of these services under a single service contact identifier, such as a telephone number.

As an example, it is known in the art to use a single telephone nurrber of a recipient for obtaining telephony services, internet services and payment services as exemplified by the ENUM initiat ive (vwwv. enum nl). The telephone nurrber is processed and a service is requested after the processing.

However, the user of the services is still required to possess the telephone nurrber of the recipient. This requirement may also be disadvantageous for using other services than telephony, because the telephone nurrber is also required for the payment service and the internet service. In other words, even if the user would possess the bank account nurrber of the recipient, he would not be capable to wire money to the recipient in the absence of a telephone nurrber of the recipient of the payment.

US 2002/0095488 A1 discloses a method and system for advertising and updating network services on the network having a plurality of host machines connected thereto. An in-process dynamic directory associated with an application program resid-i ng in a host machine associ ates a network servi ce to a network address specified in an advertising request received from the application program and transmits an update event message for the advertised network service via reliable multicast to a plurality of application programs residing in other host machines in the net work.

EP 0 479 660 A2 discloses a communications network which is capable of interconnecting local corrputer terminals with remote service providers using a communicat ions link. The local terminals are coupled to the communicat ions link by interface units which handle network protocol functions for the terminals. One of the functions necessary at the local units is that of obtaining actual network addresses for services known locally only by service names. To perform this translation, service advertisements are periodically sent by the service providers, and a servi ce directory is generated locally from these advertisements. Then, when a servi ce request is generated locally, the service directory is searched to find the corresponding network address of the provi der of this service. If there are multiple providers of the same service some mechanism must be provided for selecting the most efficient service provider for a local requester, and for distributing the load among the various providers in an efficient manner.

US 2006/0020692 discloses techniques and mechanisms that allow web services to re-locate without impacting the code of client applications that access the web services. A client application sends a message that includes an identifier to a referral service. The referral service re-directs the message to a locater servi ce based on the identifier. The locater servi ce determines a set of locations associated with web services based on attributes associ ated with the client application. The attributes may include a client type, a client version, or a locale. The set of locations are transmitted to the client application for use in accessing the web services. Upon failing to access one of the web services identified within the set, the client application re-sends the message to obtain an updated set of locations.

There is a need in the art to provi de an improved method and system for allowing users to make use of a service.

### SUMMARY OF THE INVENTION

It is an object of the invention to provide an improved method and system for allowing users to make use of a service.

A method and system for providing a first service are respectively defined in claims 1 and 9.

Moreover a computer program for executing the method and a carrier therefore are disclosed.

The disclosed method and system allow the user to transmit an arbitrary service contact identifier to the system in combination with a service identifier indicating the service he desires to use. The received arbitrary service contact identifier may then be used to trace the first service contact identifier belonging to the received first service identifier. Thus, if the user possesses an arbitrary service contact identifier of an intended recipient or delivery party/address of a service, he may be able to use that service in relation to that recipient/delivery address. As an example, the user may transmit a service identifier indicating that he desires to use a telephony servi ce in combination with a bank account nurrber of the recipient of the telephone call to the system The system then traces the telephone nurrber of the recipient using the telephony servi ce request and the bank account nurrber of the recipient. On the other hand, the user may wire a payment to the recipient by transmitting a payment servi ce request in combination with a telephone nurrber of the recipient of the payment service.

Of course, the system may also trigger external service providers to perform the requested service. Such a trigger may be provided automatically or in response to the result of an internal decision algorithm The internal decision algorithm may e. g. relate to the question whether or not the intended recipient of the service has subscribed to use the services provided by the system

The method and system enable a finely tuned decision process whether or not the first service should be provided. This is decided on the basis of a requirement list of the recipient and a user profile of the user of the service.

One of the items relates to the spam behavi our of the user and/or recipient on the system The spam behavi our in the system can be registered as a result of one or more spam notification signals received from addressees of e.g. an electronic message. These methods and system have been described in the non- prepublished international patent applications PCT/NL2007/050557 and PCT/NL2007/050555.

The user profile may contain further items, including user defined items. User defined items (and the correspondi ng criteria) relate to items and criteria not presented as default by the system Such user defined items provide greater flexibility for the users and recipients.

The recipient/destination party is thus totally in control of his contacts by setting the criteria of his requirement list. The embodiments relate to permitting or denying service using information (items and criteria) that is usually irrelevant for providing the service.

The database may comprise a third service contact identifier required for providing a third service, said third service contact identifier being different from said first service contact identifier and said second service contact identifier, said method comprising the step of retrieving said first service contact identifier in dependence of said received first service identifier and said received service contact identifier, irrespective of whether said received service contact identifier is said first, second or third service contact identifier. This provi des the advantage of allowing the use of an arbitrary one of at least three service contact identifiers to obtain information relating to one of at least three corresponding services.

The first and second servi ce may be selected from the group consisting of a tel ephony servi ce, an electronic message servi ce, a browsing servi ce, a payment servi ce, a streaming media servi ce, a route navigation servi ce and a mail delivery service.

The first service contact identifier may be transmitted to the user of the system This provides the advantage that the user is provided with service contact details for allowing the user to perform the correspondi ng servi ce, e.g. via another system.

While the above embodiments relate to a check of the item of the user profile against a criterion of the recipient requirement list, the embodiments of claims 2 and 10 also require a check in the opposite direction, i.e. whether or not an item of the recipient profile matches a corresponding criterion of the user requirement list. The first situation is advantageously used in black-listing and white-listing approaches (where the initiative is mainly with the recipient) whereas the second situation relates to a handshake or mutual approval situation, wherein the differentiated approach can be used to advantage. The mutual approval situation has been described for telephony services using a personal identifier in the non-prepublished international patent appl ication PCT/NL2007/050553 of the applicant.

The user requirement list can be obtained from a user identifier received from the recipient or from login data of the user as defined in claims 3 and 11.

The system may be configured for providing a plurality of services, including telephony services, IP telephony services (e.g. VoIP), electronic messaging services, media streaming services, web browsing services, payment services, regular mail services and route navigation services, each identified by a corresponding service identifier. The embodiments of claims 4, 5, 12 and 13 provi de the advantage that a combination of an items of a profile and a correspondi ng criterion of a requirement list may be applicable for at least two services. The embodiments allow that non-fulfilment of criteria of a requirement list has consequences for various services. As an example, if an item of a profile indicates that the owner of this profile is an e-mail spammer, this may not only influence the use of e-mail services, but also of other services, such as a telephony service and/or a regular mail service. Services for which criteria of a requirement list apply can be selected.

The service contact identifiers of recipients / delivery parties / destination parties may include a device contact identifier, e. g. a telephone nurrber, and personal contact identifiers, e. g. an e-mail address, a home address, or a login name. At least one of the criteria of the requirement list(s) is independent of these service contact identifiers and therefore provides the possibility of a greater degree of differentiation.

Items from the profile(s) may be system items and/or user defined items. System items relate to the behavi our of the user and/or recipient on the system

Of course, items of the profile list(s) may be errpty, correct or incorrect. The embodiments of claims 6 and 14 allow for a differentiation of verified items and unverified items. There is a high probability of correctness for verified items, whereas for unverified items the probability of correctness is unpredictable. The method and system may be such that the users and/or recipients are enabled to indicate whether the item checked against a criterion of the requirement list of the user and/or recipient should be a verified item This feature reduces the chance that that a user or recipient becomes involved in a service transaction that is not desired or intended.

Items may be blocked from checki ng against criteria of a requirement list in accordance with the embodiments of claims 7 and 15. The indication of the prevention of such checki ng of items may be set by default and/or upon indication from a user device. This feature avoids the possibility of undesired fishing expeditions for items of a profile by submitting various service requests to the system and see if the items of the targeted recipient match the criteria of the user requirement list. These embodiments are particularly relevant to the mutual approval situation, but may also apply to black listing and white listing situations. Optionally, a permanent or temporary release of the restrictions applying to the checki ng of the items is all owed.

Hereinafter, embodiments of the invention will be described in further detail. It should be appreciated, however, that these embodiments may not be construed as limiting the scope of protection for the present invention.

### BRIEF DESCRIPTION OF THE DRAW NGS

In the drawings:
FIG. 1 shows a schematic illustration of a server system according to a first embodiment;
FIG. 2 shows a schematic illustration of the electronic device configured for use with the system of FIG. 1;
FIGS. 3A and 3B show schematic illustrations of the system of FIG. 1;
FIG. 4 shows a flow chart in accordance with an embodiment of the invention;
FIG. 5 shows a flow chart with steps that may be added to the flow chart of FIG. 4.
FIG. 6A and 6B show situations relating to a system comprising profiles and requirement lists.
FIG. 7 shows a schematic illustration of a server system accordi ng to a second embodiment; and
FIGS. 8-14 show various time diagram illustrating step of embodiments of a method using the system of FIG. 1 and FIG. 7.

### DETAILED DESCRIPTION OF THE DRAW NGS

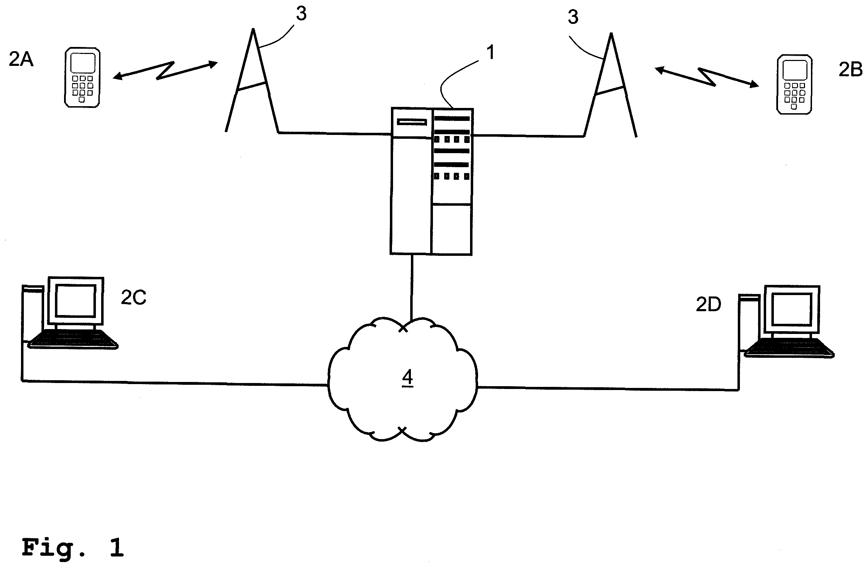

FIG. 1 shows a server system 1 communicatively connected to electronic devices 2A-2D. Mobile devices 2A, 2B are connected via wireless access networks 3 to the server system 1. Stationary devices 2C, 2D are connected via network 4, such as the internet or a local area network, to the server system 1. The network connections may be secured. In the following, it will be assumed that the devices 2A, 2C are used by a user of the server system 1, whereas devices 2B, 2D are devices of a recipient.

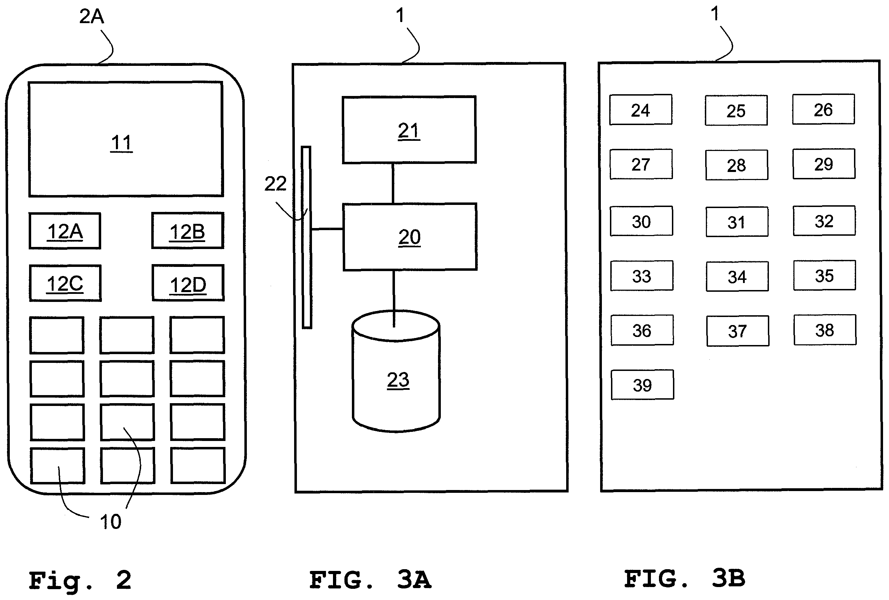

Mobile device 2A, schematically shown in FIG. 2, may be a mobile phone corrpri sing a keyboard with a plurality of (numerical and/or al phanumerical) keys 10 and a display 11. Furthermore, the mobile device 2A comprises service identifier keys 12A, 12B, 12C, 12D. These keys allow a user to communicate a servi ce he desires to use to the server system 1. It should be appreci ated that the keys 12A-12D are not necessarily separate keys, but may also be implemented otherwise, e.g. by one or more soft keys using the display 11 to indicate the function of the soft key at a particular moment. Selection of a service may also be made from a software menu. It should also be appreci ated that the same functionality is possible for a stationary device 2C. Finally, it is not ed that the type of servi ce desired by the user of the devices 2A, 2C may also be implicit from the message sent to the server system 1. As an example, if the user device 2A, 2C transmits a money value, it may be implicit that a payment service is requested.

FIGS. 3A and 3B show schematic illustrations of the server system 1.

The server system 1 corrpri ses a processor 20, a memory 21, a network adapter 22 for communication with one or more of the devices 2A-2D vi a the networks 3, 4 and a relational database 23. The database 23 may be provided internal to or external from the system 1 and the data stored in the database 23 may be distributed over a plurality of databases. It should be appreciated that the server system 1 is normally capable of connecting to more than the four electronic devices 2A-2D shown in FIG. 1.

The specific functions of the server system 1 are schematically illustrated in FIG. 3B and will now be described in further detail. It should be appreciated that the functions may be largely implemented as software code portions of one or more computer programs executed on the processor 20.

The server system 1 corrpri ses a recei ver 24 configured for receiving a service identifier and a service contact identifier of the recipient / destination from the user devices 2A, 2C. Identifiers of the users may be received from the recipient devices 2B, 2D. The identifiers may include a telephone nurrber, an e-mail address, a bank account nurrber, a URL, a home address, a navigation location etc.

The server system comprises a retrieval module 25 configured for retrieving a service contact identifier corresponding to the received service identifier and a received arbitrary service contact identifier stored in the database 23. The received service identifier indicates the service desired by the user and thus determines the service contact identifier retrieved from the database 23 in combination with the arbitrary servi ce contact identifier stored in the database for a particular recipient / delivery address.

The server system 1 also contains one or more service providers, such as a payment servi ce provi der 26 and a communication service provider 27. The payment service provider 26 is configured for providing the payment service for making a payment to the recipient on the basis of a correspondi ng servi ce contact identifier of the recipient.. The communicat ion service initiator 27 is configured for initiating, and possibly establishing, a communication service, such as a telephony service, an electronic message servi ce, a streaming media service and/or a web browsing service for establishing communication with the recipient using a corresponding service identifier for establishing the communication. The server system may also comprise a regular mail service provider and/or a navigation service provider (not shown). The regular mail service provider provides the appropriate delivery address for a package or letter to be sent. The navigation service provides a route from a particular location to another location associated with the destination.

In order to identify the type of servi ce requested by the users of the electronic devices 2A, 2C, the server system 1 has a service identifier analyser 27 configured for analysing the service identifier from a servi ce request the mobile devices 2A, 2C. The service identifier may relate to a communication servi ce, a payment service, a regular mail service and a navigation service.

It should be appreciated that a composed message may be received from the user device(s) 2A, 2C containing the service identifier, an arbitrary service contact identifier and/or other data such as a monetary value for a payment service, an attachment and/or other contents.

The server system 1 also contains a payment connection module 29 for connecting to a payment system for making use of an external payment service using the payment address identifier and a communication connection module 30 for connecting to an external communication system for initiating the communication service using the conmunication address identifier. Other modules include a regular mail connection module and/or a navigation connection module. These modules may be used for recipients using e.g. payment, communication, regular mail and navigation services provided external to the server system 1. The server system 1 may have a determination module 31 configured for determining whether the recipient uses the payment service and/or the communication service of the server system 1 or an external system

The server system 1 also comprises a login module 32 for receiving a login request from the device(s) 2A, 2C. The login request comprises at least one personal identifier in order to identify a user of the device 2A, 2C. Preferably, the user is identified by a combination of a user name and a password. The users are subscribers to the server system 1 in such a case.

The communication with the user devices 2A, 2C may be secured by e.g. secured network connections and/or data encryption techniques. In order to further increase the security, the server system corrpri ses a variable sessi on key issuer 33. The variable session key issuer is configured for issuing different sessi on keys in response to subsequent requests from the user devices 2A, 2C. The issuer 33 may use random numbers but also outside parameters (such as e.g. a temperature measured by a temperature sensor at a particular location) to obtain the variable keys.

The database 23 of the server system 1 may store profiles containing one or more items (e.g. characteristics of the user) and requirement lists containing one or more criteria from users of the user devices 2A, 2C and/or recipients using devices 2B, 2D. The profiles and requirement lists available to the server system 1 can be used to enable the users and/or the recipients to fine tune conditions under which they want to be involved in a service, e.g. in a payment transaction, a communication service, a regular mail service and/or a navigation service, as a recipient or destination party. It should be appreciated that this manner of enabling and disabling communication differs from the prior art in that the enabling or disabling is not primarily based on a service contact identifier of the devices and/or the user.

To that end, the server system 1 comprises a tracer 34 configured for tracing at least one requirement list of a user and/or a recipient. The requirement list of the recipient can be traced using the received or retrieved service contact identifier of the recipient. The same holds for the requirement list of the user, although this list may also be traced on the basis of other data in the request from the user device 2A, 2C.

Furthermore, the server system 1 has an analyser 35 configured for checking whether one or more items of a profile satisfy one or more criteria of a requirement list as will be explained in further detail below. Items and corresponding criteria may relate to a variety of personal details, not being the service contact identifier, including age, gender, body characteristics (e.g. hair colour, length), financial details, corrpany details, geographic details (e.g. place of living, place of birth, address, street, p.o. box), personal items (e.g. preferences, such as brand preferences, social preferences (sports, communities, etc.)). Items may be user defined. Preferably, the fulfilment of all criteria by the items is analyzed.

The items and corresponding criteria may also relate to the system such as e.g. the behaviour of the user and/or recipient on the server system 1. As an example, the server system may set a spam flag as an item in the profile of a user or recipient when this user or recipient has been notified as a spammer. Examples of such notification are provided in the international patent applications PCT/NL2007/050557 and PCT/NL2007/05055 of the applicant.

Briefly, these applications describe a system and method of reducing the proliferation of electronic messages in a server system corrprising one or more servers for distributing the electronic messages. The method involves providing at least one electronic message or a portion thereof and receiving at least one spam notification signal related to said electronic message or said portion thereof. A portion of an electronic message may e.g. comprise one or more fields of the electronic message or a new portion assembled on the basis of fields or characteristics of the electronic message. Access to the electronic message (and/or the portion thereof) and/or to other (previous or future) electronic messages of the same source is restricted in response to receiving said at least one spam notification signal. The number of spam notification signals resulting in the restriction of access to the electronic message may be set. As an example, the number may be set to 50, 25, 10, 5 or even 1 spam notification signal before access to the electronic message is restricted.

In this context, the applicant has realized that the conventional rule set used for recognizing e-mail spam messages is always out dated, despite the regular updates of the rule set provided by the spamfilter developers. Ultimately, only human beings will be able to recognize e-mail spam messages. Moreover, the applicant has realized that the improvement of spam filters contributes to the increase of the total amount of spam rather than reducing it. The applicant, therefore, proposes to (solely) use spam notification signals from users to detect electronic spam messages and, upon receipt of such a spam notification signal, to restrict access to the corresponding electronic message for other (users of) user devices. The server system thus allows that addressees of an electronic message themselves determine what electronic messages are spam messages and that the addressees are subsequently able to determine the access (rights) of other addressees to that message (and possibly other previous and/or future electronic messages from the same source). In other words, the spam notification signal is an order to the server system to restrict access to messages. In case of multiple spam notification signals, each signal can be regarded as a partial order. As an example, the other (users of) user devices may not display or download the electronic message. Spamfilters using spam recognition rule sets, spam parameters and criteria may be absent in the server system at least for those electronic messages for which a spam notification signal has been received.

Spam notification messages may be set or received for other services than electronic mail, where the system or the recipient/destination party finds a person abuses the system

For example, for telephony services, a system and method can be applied for establishing a telephone connection between a first subscriber device (A-subscriber device) and a second subscriber device (B-subscriber device) in a telephone system The telephone system is arranged for connecting the A-subscri ber device (the calling party) and the B-subscriber device (the called party). The method includes receiving a request from the A-subscriber device to establish a connection with the B-subscriber device and also receiving a personal identity code of a user of said A-subscriber device. The connection can be established between the A-subscriber device and the B-subscriber device only after having received said personal identity code of said user of said A-subscriber device.

By receiving a personal identity code of a user, the telephone system is able to actually recognize the person that is requesting services of the system instead of only recognizing the device that is used. Consequently, the telephone system can apply measures to a particular user instead of only to a device as a result of the received authentication information. In other words, measures applied to a particular users cannot be avoided or circumvented by using a different device. An example of such a measure may be restricting the access of a particular user to services of the telecommunication system

In order to make spam notification, the system and method may allow receiving one or more access restriction signals and restrict access to at least one of said tel ephone system and a user of said A-subscri ber device or said B-subscri ber device for at least one of said user of said A-subscri ber device and said user of a B-subscri ber device in response to receiving said one or more access restriction signals.

The user of the B-subscriber device has the possibility to restrict access to the telephone system for the user of the A-subscriber device if the telephone call is perceived by the user of the B-subscriber device as unsolicited or undesired. Access is restricted on the basis of the personal identity code of the user of the A-subscri ber device and, therefore, this user cannot simply circumvent this measure by using a different A-subscri ber device. The personal identity code may e.g. be stored such that further attempts to establish a connection by the person owning the code are first checked against this storage before a connection can be established.

The telephone system spam notification method and system is the subject of a non-prepublished patent application PCT/NL2007/050553 of the applicant.

The system item relating to spam may be set in the above-described manner. The system and/or users may determine whether this spam item relates to a single service or to multiple services.

Of course, a possibility exists that the items of the user profile or recipient profile do not appropriately reflect the personal details. For example, a user or recipient item may indicate that the user or recipient is female at the age of 20, while in fact he is a 45-year old male. As another example, a user or recipient item may indicate that his bank balance is below 50000 Euros, whereas in fact his bank balance is above 100000 Euros. To that end, the server system 1 distinguishes between verified item and unverified items. As an example, if the server system 1 provides payment services using payment service provider 26, an item relating to the bank balance of a user or recipient can be verified internally, since the bank balance is recorded in the server system 1. In other cases, such as gender or age, verification may be performed by checki ng external registers, requiring users and recipients to submit a copy of the passport etc. to verify the validity of the item Verification of unverified items may also take place by verifying changes in the items, such as changes in age or gender. Age should always change upwards with one year at the time, whereas gender generally would not change at all. If such items change in an unexpected manner, the items may be set to be unverified, either indefinitely or not. As a severe measure, the complete profile may also be marked as not trustworthy.

In order to increase certainty, the server system 1 corrpri ses a verification indication receiver 36 configured for receiving and processing a verification indication from a device 2A, 2C of the user and/or a device 2B, 2D of a recipient. By means of the verification indication, the user and/or recipient may indicate that one or more criteria of the requirement list(s) should relate to verified item(s) of the profile(s).

Although the profile items are safely secured within the server system 1 and cannot be requested as such from outside the server system 1, in principle it would be possible to obtain an estimate of one or more items, e.g. one's bank balance, by making various requests to the server system 1 sending a service contact identifier of this person. The server system 1 may therefore be configured such that items of the profiles of the user and/or the recipient are by default prevented from checking. Furthermore, the server system 1 comprises a checking prevention indication receiver 37 configured for receiving and processing a checking prevention indication from a device 2A, 2C of a user and/or a device 2B, 2D of a recipient. The checki ng prevention indication indicates a request from a user and/or recipient that one or more items of said profile are prevented from checking by the analyser 35.

In the server system 1 as described above, there exist various situations wherein an item is not available for checking against a criterion. Examples include the situation wherein a profile does not contain an item required for checking against a criterion of a requirement list (e.g. when the item is not filled in or does not even exist) and the situation wherein an item is prevented from checking by the default setting or by a checking prevention indication signal (see previous paragraph). In order to allow the user or recipient to decide to be engaged in the service, the server system 1 comprises a notification transmitter 38 configured for transmitting a notification request to a device 2A-2D of the user or recipient from whose profile the check would be made, e.g. by means of a pop-up screen on the device. The notification request may present an option to ignore e.g. the checking prevention indication to permit checking of said at least one item against a corresponding criterion of a requirement list or to fill in an item If the user/recipient permits checking, the prevention indication may be lifted either permanently or temporarily by the server system 1 receiving such an instruction from the devices 2A-2D. As an example, if a user desires to communicate with a recipient by telephone and the recipient requirement list indicates that this is only possible if the bank balance of the user is checked as an item on the user profile list against a corresponding criterion on the recipient requirement list, the user should first permit checking of his bank balance before the communication is established. The release of the checking prevention indication does not mean that this information is communicated to the other party. It only involves the availability of an item for a check against the criteria of a requirement list. Of course, the recipient may also unblock his items, if desired, e.g. for marketing purposes.

Items and criteria may be set to apply for one or more services using service selector 39.

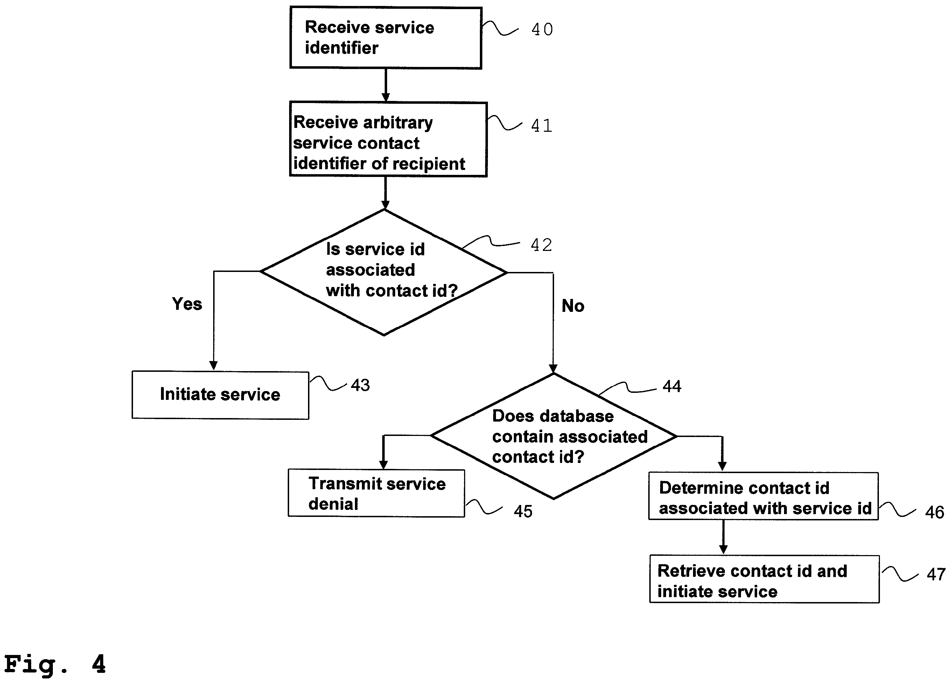

FIG. 4 illustrates a flow chart in accordance with an embodiment of the invention. The database 23 may store the following service contact identifiers of a recipient named Dirk.

| Service identifier | Service contact identifiers Dirk |
|---|---|
| Telephone | 1234567890 |
| Electronic messages | dirk@mail.com |
| Banking service | 50.37.56.587 |
| Browsing service | |
| Mail delivery | Laakseweg 24 Etten-Leur |
| Route navigation | Laakseweg 24 Etten-Leur |

In step 40, a service identifier is received by receiver 24 from user device 2A. The service identifier may e. g. relate to telephony, determined by service identifier analyser 28.

In step 41, an arbitrary service contact identifier of Dirk as listed in the above table is received by receiver 24 from user device 2A.

In step 42, the retrieval module 25 determines whether the it is determined whether received service contact identifier is associated with the received service identifier.

As an example, if the servi ce contact identifier is determined to be a telephone number, the telephony service can be initiated directly (step 43). Initiation of the telephony service can be performed by making a call request to the telephone nurrber of the recipient using communication service provider 27. Alternatively, initiation may involve connecting to an external telephony system using communication connection module 30.

However, in step 42, it may also be determined that the received service contact identifier is not associated with the received service identifier. In other words, the recipient cannot normally be contacted for the indicated service using the received service contact identifier.

In step 44, the retrieval module 25 determines whether or not the service contact identifier of the recipient / destination required for the intended service is available.

Suppose, the user of the device 2A would have desired a browsing service to a web page of Dirk, using the telephone num ber of Dirk as the arbitrary service contact identifier, a service denial would be transmitted to the device 2A (step 45), since the URL of the web page is not available (see the above table).

However, the system 1 allows the users requesting a telephone service to transmit the service contact identifiers associated with the electronic message service, banking servi ce, mail delivery service and route navigation service. The retrieval module 25 would determine from the service identifier that a telephone nurrber would be required for the indicated service and that the telephone nurrber should be the telephone nurrber of Dirk on the basis of one of the electronic message address dirk@mail.com, the bank account nurrber 50.37.56.587, or the mail delivery/route navigation address Laakseweg 24 Etten-Leur (step 46).

Finally, in step 47, the retrieval module 25 would retrieve the telephony number 0123456789 from the database 23 and initiate the service. Initiation of the telephony service can be performed by making a call request to the telephone number 0123456789 of the recipient using communication service provider 27. Alternatively, initiation may involve connecting to an external telephony system using communication connection module 30.

It is noted that instead of service initiation, the server system 1 may transmit the telephony nurrber 0123456789 to the user device 2A.

Other examples include e.g. using a telephone nurrber of a recipient to obtain routing information from the server system to a particular destination address or using an e-mail address to wire money to a particular bank account.

The possibility provided by the server system 1 allows that an arbitrary service contact identifier is sufficient to involve a recipient in a variety of services. Such a system is prone to abuse and measures may be taken to avoid that a recipient becomes engaged in a service without his approval.

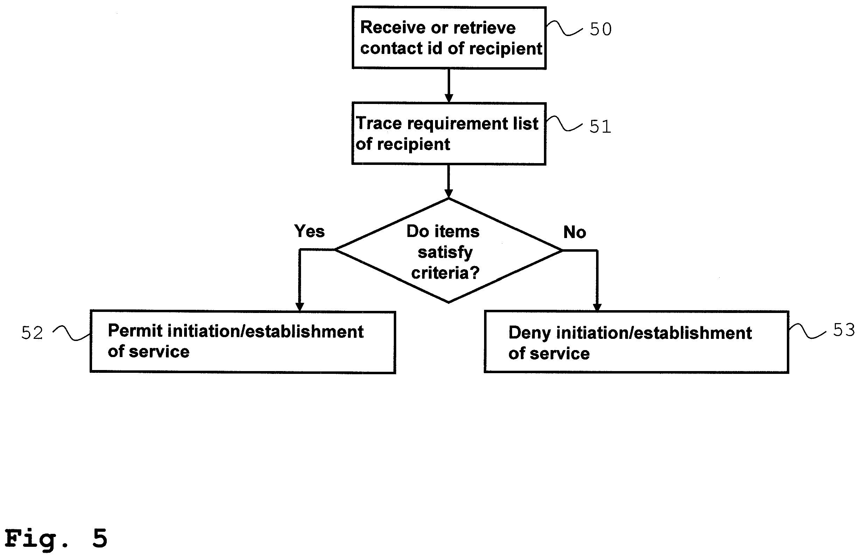

FIG. 5 shows a flowchart containing various steps of a method of permitting or denying service, e. g. service initiation or service establishment. In step 50, the receiver 24 receives a service contact identifier of the recipient from the user device 2A. The service contact identifier may be a telephone number, an e-mail address, a bank account nurrber, a URL, a home address, a navigation location. In step 51, the requirement list of the recipient is traced in the database 23 on the basis of the received arbitrary contact identifier or on the basis of the retrieved service contact identifier after following the process described with reference to FIG. 4. In other words, the processs steps of FIG. 5 may e. g. be performed after step 41 or after step 46 in FIG. 4. The requirement list may also be retrieved from another location. Also the profile of the user is traced, e.g. on the basis of login data received by the login module 32.

A check is then made by the analyser 35 whether or not all criteria of the recipient requirement list are satisfied by corresponding items of the user profile. If the criteria are met, service initiation or service establishment is allowed (step 52). Otherwise, service initiation or service establishment is denied.

Two cases may be distinguished.

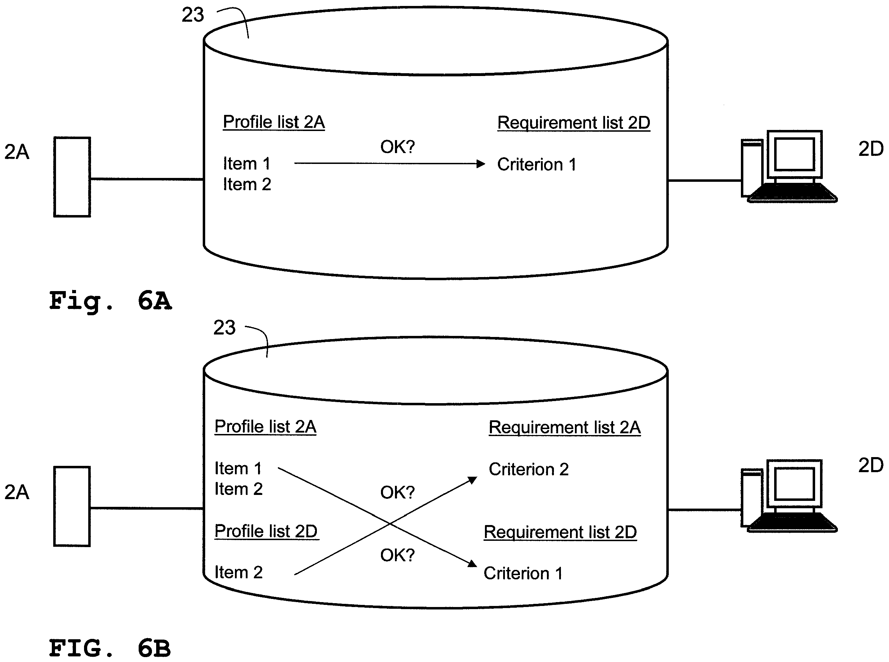

In a first case, shown in FIG. 6A, the analyser 35 only corrpares the one or more items of the profile of the user of the device 2A, 2C with the appropriate corresponding criteria of the intended recipient. If the items of the user profile fulfil the corresponding criteria of the recipient requirement list, service is allowed. As an example, the payment servi ce provider 26 and/or the communication service provi der 27 are activated. Other services that may be initiated are streaming media services, a regular mail service and/or a navigation service. On the other hand, if the items do not fulfil the criteria, service initiation or establishment are denied. This type of analysis is suitable for white listing and/or blacklisting approaches.

In a second case, shown in FIG. 6B, the analyser 35 not only makes the above comparison, but also analyses whether or not one or more items of the recipient profile fulfil criteria of the user requirement list. Service is denied if a user item of the user profile does not satisfy a recipient criterion of the recipient requirement list and/or if a recipient item of the recipient profile does not satisfy a user criterion of the user requirement list. Only if the items fulfil the criteria in both directions, the service initiation is permitted. This case can be referred to as a handshake case or a mutual approval case.

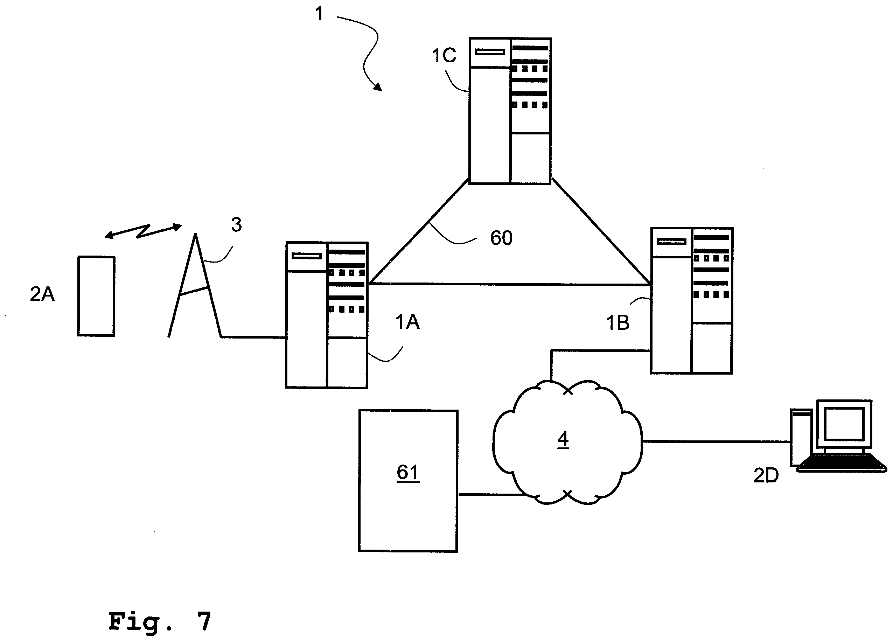

The server system 1 of FIG. 7 is an embodiment comprising multiple servers 1A-1C, wherein server functions and/or data are e.g. distributed over multiple servers connected by secured network connections 60. In FIG. 7, a payment service, a comunication service, a regular mail service and/or a navigation service is executed by an external system 61. The external system 61 may be connected via a gateway (not shown) to the server system 1. Items and criteria may be distributed over the servers 1A-1C and be retrieved from the various servers 1A-1C upon request of a service. Such an embodiment may e. g. be useful to safeguard privacy.

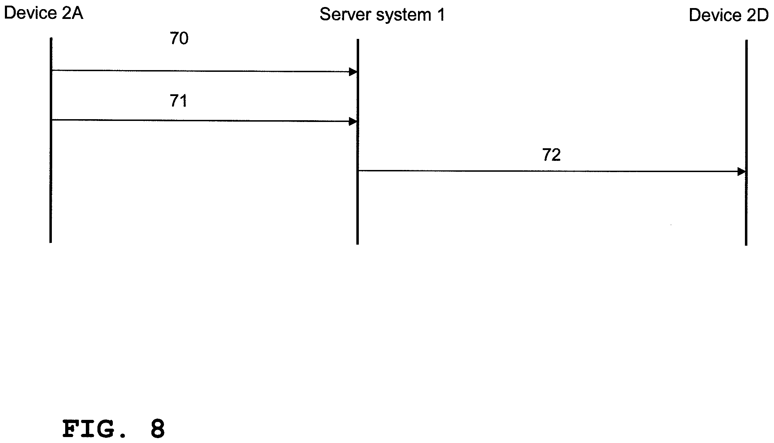

The operation of the server system 1 will now be described for several practical situations with reference to FIGS. 8-14.

First, it is assumed that a business transaction is to be arranged between Ghislaine (user) and Dirk (recipient). Ghislaine only has a business card of Dirk displaying the e-mail address of Dirk.

The below table shows details of Dirk and Ghislaine stored in the database 23 of the server system 1.

| Name | Ghislaine | Dirk |
|---|---|---|
| Username | ***** | **** |
| Password | ***** | **** |
| | | |
| Telephone nurrber | +31 20 51 10 930 | 0123456789 |
| Bank account | | 50.37.56.587 |
| E-mail address | | dirk@mail.com |
| Website | | www.scipioo.com |

FIG. 8 shows the situation wherein Ghislaine attempts to contact Dirk by telephone. She logs in on the server system 1 using login module 32 with her user name and password in step 70. Then, in step 71, she makes a phone call using the e-mail address dirk@mail.com which is received by the recei ver 24. The retrieval module 25 determines the telephone number of Dirk in dependence of the phone call (service identifier) and the e-mail address. The analyzer 35 then checks whether items of Ghislaine's profile satisfy corresponding criteria of Dirk's requi rement list as described with reference to FIG. 5. If this is true, the telephone connection can be made in step 72 via the telephony service provider 27.

In the telephone conversation, it is discussed that Ghislaine should wire a payment of B 100 000 to the bank account of Dirk. Ghislaine is not aware of the bank account nurrber of Dirk.

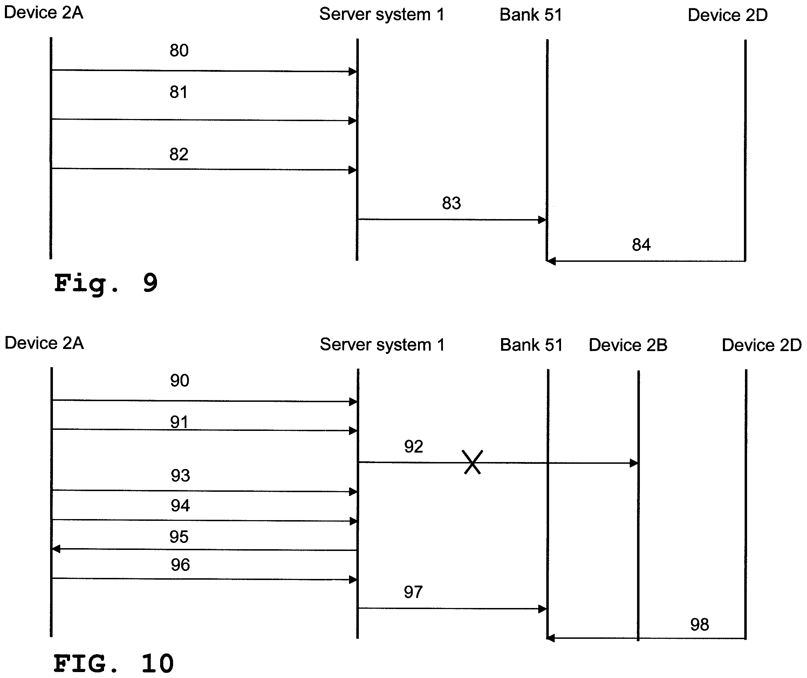

In FIG. 9, Ghislaine logs in on the server system 1 using login module 32 again using device 2A in step 80. Of course, logging in would not necessarily be required twice if the connection with server system 1 was maintained. The server system 1 presents an interface of the display 11 using a first sessi on key. Ghislaine again enters the e-mail address of Dirk to make the payment (service identifier) to Dirk in step 81 and the server system 1 presents a further screen to enter a payment amount under a second sessi on key, different from the first session key. The second screen may only be presented if Ghislaine's profile items satisfy Dirk's criteria as known from his requirement list. The payment amount of B 100 000 is received by the server system 1 in step 82. Of course, the payment amount may also be received by the server system 1 in step 81, i.e. together with the e-mail address of the Dirk.

The determination module 31 determines that Dirk does not use the bank services of the server system 1. In response to this determination, the payment connection module 29 is activated to make the payment to an account on an external bank system 61 (FIG. 7) in step 83. Dirk may now use his device 2D to check with his bank 61 whether or not the payment has been made (step 84).

The profiles and requirement lists of Ghislaine and Dirk are provided in the below table.

| | Profile PUID (Ghisje) | Profile PUID (DiRk) |
|---|---|---|
| Gender | Female | Male |
| Age | 25 | 45 |
| Bank balance | BLOCKED | B 1 500 000 |
| Industry | ICT (not verified) | ICT |
| | | |
| SPAM notification | YES | NO |
| | | |
| | Requi rement list Ghisje | Requi rement list DiRk |
| | | |
| | Industry = ICT | Industry = ICT (verification required) |
| | | Bank balance > B 50 000 (f or payment services) |

FIG. 10 shows a login step 90 of Ghislaine using the login module 32 for verifying the user name and password. In step 91, a corrposed message containing the e-mail address of Dirk and the service identifier indicated that a telephony service is requested is received by the receiver 24 and the service identifier analyser 28. Of course, steps 90 and 91 may also relate to a simple telephone call containing the telephone number of Dirk that is picked up by the system 1.

The e-mail address of Dirk is used by the tracer 35 to trace the requirement list of Dirk. The requirement list comprises a first criterion relating to the type of industry the other party should be involved in, viz. information and communications technology industry (ICT). This criterion should be fulfilled for all services. Moreover, the industry item of the profile of the other party (in this case Ghislaine) should be a verified item The requirement list of Dirk comprises a second criterion prescribing that the bank balance of the other party should be higher than B 50 000. However, this criterion is only relevant for payment services, which has been set using the service selector 39. Dirk may have entered these criteria in the server system 1 before the login step 90.

In the present case, the telephony service will not be provided, since the analyser 35 will find that, although the industry item in the profile of Ghislaine is ICT, this is not a verified item such that the analyser 35 will not instruct the telephony servi ce provi der 27 to initiate a telephone connection (indicated by the cross in step 92).

This situation will force Ghislaine to have the industry item of her profile verified in the server system 1, e.g. by submiting contract details to the moderator of the server system 1. If this item is verified, a telephone connection between device 2A and device 2B can be established via the telephone service provider 27 in accordance with the case of FIG. 8.

It should be noted that if Dirk's requirement list would have contained a criterion that Ghislaine should not have been notified as a spammer on the server system 1, the analyser 35 would have never triggered the telephone service provider 27, since Ghislaine's profile list includes a system item indicating that she has received a spam notification. This item is by default a verified item that could not be prevented from checking by the analyser 35. The system item may either be valid for only one service or for multiple services. In a practical situation, it is envisaged that a spam criterion is by default part of the requirement list of any user and recipient (but may be removed from this list, as Dirk has done in the present example).

After the telephone conversation, Ghislaine again desires to wire a sum of B 100 000 to the (external) bank account of Dirk. Ghislaine submits the e-mail address of Dirk to the server system 1 in step 73 together with a service identifier indicating that a payment servi ce is requi red. This indication may be implicit by entering the amount of B 100 000 in an amount field on the display 11, which amount is received in step 94. The e-mail address, the service identifier and the amount field may be received in a single corrposed message.

After tracing the requirement list of Dirk using tracer 35 on the basis of the e-mail address of Dirk, the analyser 35 finds that Dirk's requirement list also has a criterion, that should only be checked for payment services, wherein the other party has a bank balance of at least B 50 000. When checking the corresponding item in the profile of Ghislaine, the analyser finds that this item is prevented from checking. This may be the default setting or may be set by Ghislaine using the checking prevention indication receiver 37 of the server system 1 (see table: BLOCKED). It should be appreciated that all items and criteria are not communicated to users of the server system 1 as such, but may be available for checking by the analyser 35, if not prevented. Consequently, the analyser 35 can not perform the check for the bank balance of Ghislaine in this case. The analyser 35 can again perform the check of the industry requirement. It is noted that if the bank balance requirement was also applicable for other services, such as the telephony service, the telephony service was not initiated before allowing the check of the bank balance (and if the bank balance was found to be insufficient, a telephony service would not be initiated). That is, criteria may either be applicable to one service or to a plurality of services.

Ghislaine may have chosen an option that in such a case, the notification transmitter 38 of the server system 1 notifies her, step 95, of the fact that Dirk's requirement list requires checking of her bank balance before a payment can be made. She may then chose to (temporarily) permit checking of her bank balance item step 96. Subsequently, the analyser 35 may perform the check against the bank balance criterion of Dirk's requirement list and trigger the payment service initiator 25 to start the payment transaction (steps 97, 98 in accordance with steps 83, 84 of FIG. 9).

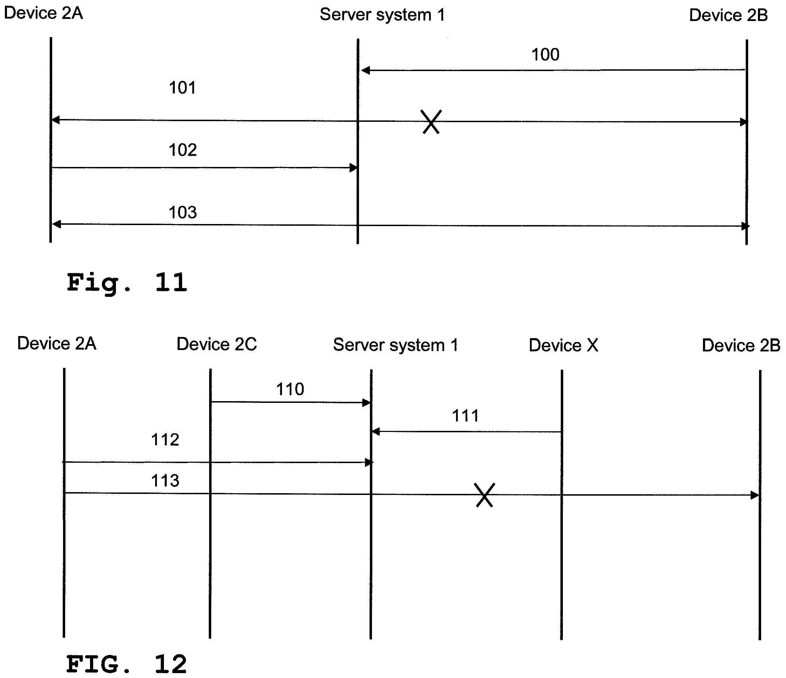

FIG. 11 provides yet another exampl e of a method for permitting or denying service.

Deirdre and Henk have agreed to make a phone call. Henk uses his device 2B. The system 1 in step 100 receives the telephone nurrber of Deirdre and tracer 34 traces the requi rement list of Dei rdre on the basis of the telephone nurrber. The profile of Henk is also traced and the analyser 35 checks whet her the items of Henk's profile satisfy the applicable corresponding criteria of Deirdre's requirement list. It is assumed that the analyser 35 finds that the items of Henk's profile satisfy the criteria of Deirdre's requirement list.

However, the system 1 has been set that mutual approval is required for initiating this service and, therefore, the telephone communication is not yet effected (indicated by the cross in step 101).

At a later moment, Deirdre contacts the system 1 (step 102) using Henk's telephone nurrber. The tracer 34 now traces Henk's requirement list and the analyser 35 checks whether Deirdre's items match the criteria of Henk's requirement list. If the analyser 35 finds that the item of Deirdre's profile satisfy the criteria of Henk's requirement list, telephone communication may be initiated (step 103), either directly after the check or at a later time.

The embodiment of FIG. 11 uses the mutual approval method described with reference to FIG. 6B. It should be appreciated, however, that mutual approval does not necessarily requi re both parties to contact the system 1. In the above example, Henk's call would allow both checks to be made on the basis of the telephone nurrber of Ghislaine and the contact details of Henk (e.g. his login data, a telephone number, the IMEI code etc.).

FIG. 12 shows a case wherein a user sends a spame-mail from his user device 2C (step 110). In step 111, the system 1 receives a spam notification message of an arbitrary user device X. The spam notification message may be obtained in a manner described in the non-prepublished international patent applications PCT/NL2007/050557 and PCT/NL2007/050555 of the applicant. The profile of the user now has a system item reflecting that the user has been notified as a spammer. In step 112, the user makes a telephone call to recipient device 2B with his mobile phone 2A. The tracer 34 of the system 1 traces the recipient requirement list of the recipient. The analyser 35 finds out that the recipient requirement list contains a criterion that the recipient would not like to be involved in a service initiated by someone that is registered as a spammer. Consequently, a telephone connection will not be established, indicated by the cross in step 113.

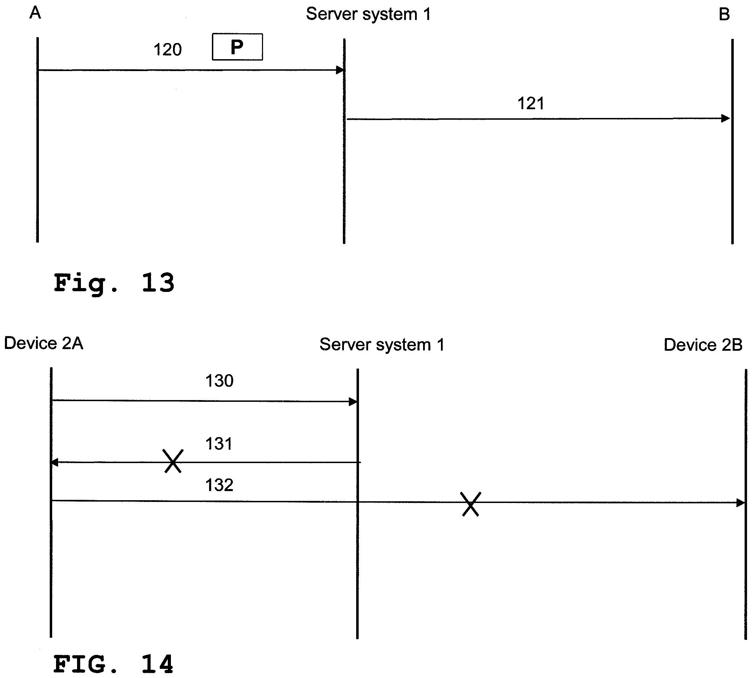

In FIG. 13, a user A sends a letter or parcel P to a corrpany having access to the server system1 (step 120). The letter contains an arbitrary contact identifier, e. g. a telephone nurrber, of an intended recipient B. The fact that a mail delivery service is required is implicit. The arbitrary contact identifier is scanned and if the items on the profile list of user A satisfy the correspondi ng criteria of the requirement list of recipient B, the actual address of the recipient B is released by the system and the letter or parcel P can be delivered to the recipient at this address (step 121). Of course, the user A may also send the arbitrary contact identifier to the server system and obtain the address only if his item(s) satisfy the criteria of the recipient requirement list of B. Payment can also be arranged via the server system 1.

In FIG. 14, a user A enters a telephone number (or another arbitrary service contact identifier) of an intended location of anot her party B into his navigation device 2A (not necessarily a mobile phone). The navigation device 2A sends a request to the server system containing the telephone nurrber and the service identifier identifying use of a navigation service for route information to this location (step 130). On receipt of the request, the analyser 35 checks whether the items on the profile list of user A satisfy the corresponding criteria of the requirement list of recipient B. As an example, the criterion of the requirement list of B is that navigation information should not be provided to patent attorneys. Since the profession item of user A indicates that user A is a patent attorney, navigation information is not provided to the navigation device 2A (indicated by the cross in step 131). Therefore, the patent attorney A will not be able to navigate to B using his navigation device 2A (indicated by the cross in step 132).

## Claims

1. A method for providing a first service as identified by a first service identifier to a user using a server system (1) configured for connecting with a user device (2A, 2C) of the user,
**characterized by**
the server system(1) having access to a database (23) corrprising at least:
- a first service contact identifier of a recipient required for providing the first service to the user in a manner involving the recipient, the recipient not being the user,;
- a second service contact identifier of the recipient required for providing a second service to the user in a manner involving the recipient, the second service contact identifier being different from the first service contact identifier,
the method comprising the steps of:
- receiving the first service identifier from the user device (2A, 2C) of the user
- receiving the second service contact identifier of the recipient from the user device (2A, 2C) of the user;
- retrieving the first service contact identifier of the recipient from the database (23) in dependence of the received first service identifier and the received second service contact identifier,
wherein the server system(1) further has access to a recipient requirement list of the recipient and a user profile of the user, the recipient requirement list corrprising at least one criterion regarding a spam related item of the user profile,
the method further corrprising the steps of:
- tracing the recipient requirement list on the basis of at least one of the retrieved first service contact identifier and the received second service contact identifier;
- checking whether the spam related item of the user profile satisfies the criterion of the recipient requirement list; and
- permitting the first service to be provided to the user in a manner involving the recipient if the spam related item of the user profile satisfies the criterion of the recipient requirement list and
- denying the first servi ce to be provided to the user in a manner involving the recipient if the spam related item of the user profile does not satisfy the criterion of the recipient requi rement list.

2. The method accordi ng to claim1, wherein the server system (1) has access to a user requirement list of the user and a recipient profile of the recipient and wherein the user requirement list comprises at least one criterion relating to an item of the recipient profile, the method further comprising the steps of :
- tracing the user requirement list;
- checking whether the item of the recipient profile satisfies the at least one criterion of the traced user requirement list;
- permitting the first service to be provided only if the item of the recipient profile also satisfies the at least one criterion of the user requirement list.

3. The method according to claim2, further corrprising the step of tracing the user requirement list on the basis of at least one of login data received from the user device (2A, 2C) and from a service contact identifier received from a device (2B, 2D) of the recipient.

4. The method accordi ng to one or more of the preceding claims, wherein the server system (1) is configured for permitting or denying service for at least a first service and a second service, the method comprising the step denying the service initiation of the first service and the second service if the item of the user profile does not satisfy the at least one criterion of the recipient requirement list.

5. The method according to claim4, wherein the server system(1) has access to a user requirement list of the user and a recipient profile of the recipient and wherein the user requirement list comprises at least one criterion relating to an item of the recipient profile, the method further corrprising the steps of :
- tracing the user requirement list;
- checking whether the item of the recipient profile satisfies the at least one criterion of the traced user requirement list;
- permitting service of the first service and the second service only if the item of the recipient profile also satisfies the at least one criterion of the user requirement list.

6. The method accordi ng to one or more of the preceding claims, wherein the item of the profile(s) comprise verified items and unverified items, and wherein, optionally, the server system recei ves from at least one of a device (2A, 2C) of the user and a device (2B, 2D) of the recipient a verification indication that the at least one criterion of the requirement list relates to a verified item or an unverified item of the profile.

7. The method accordi ng to one or more of the preceding claims, wherein one or more of the items are prevented from checking and wherein, optionally, the server system (1) receives from at least one of a device (2A, 2C) of the user and a device (2B, 2D) of the recipient a checki ng prevention indication indicating that one or more items of the profile are prevented from checking, and optionally corrprising the step of transmitting a notification request to a device of the user or recipient for whom a checking prevention indication applies, the notification request presenting an option to ignore the checking prevention indication to permit checking of the at least one item against a corresponding criterion of a requirement list.

8. A carrier (21) containing a corrputer program comprising software code portions adapted for, when installed on and executed by an electronic system perform ng the method according to claims 1-7.

9. A server system (1) configured for providing a first service as identified by a first service identifier to a user, wherein is the server system(1) is configured for connecting with a user device (2A, 2C) of the user,
**characterized by**
the server system comprising:
- a database (23) corrprising at least a first service contact identifier of a recipient required for providing the first service to the user in a manner involving the recipient, the recipient not being the user, a second service contact identifier of the recipient required for providing a second service to the user in a manner involving the recipient, wherein the first service is identified by a first service identifier and wherein the first service contact identifier and the second service contact identifier are different service contact identifiers;
- a receiver (24) configured for receiving the first service identifier and the second service contact identifier of the recipient from the user device of the user; and
- a retrieval module (25) configured for retrieving the first service contact identifier from the database (23) in dependence of the received first service identifier and the received second service contact identifier;
- a tracer (34) configured for tracing a recipient requirement list of the recipient on the basis of at least one of the retrieved first service contact identifier and the received second service contact identifier, the recipient requirement list corrprising at least one criterion regarding a spam related item of a user profile;
- an analyzer (35) configured for analyzing whether the spam related item of the user profile satisfies the at least one criterion of the traced recipient requirement list; and
- a service initiator configured for permitting the first service to be provi ded to the user in a manner involving the recipient if the spam related item of the user profile satisfies the criterion of the recipient requirement list;
- a service denier configured for denying the first service to be provi ded to the user in a manner involving the recipient if the spam related item of the user profile does not satisfy the criterion of the recipient requirement list.

10. The server system (1) according to claim9, wherein:
- the tracer (34) is further configured for tracing a user requirement list of the user and a recipient profile of the recipient, the user requirement list comprising at least one criterion relating to an item of the recipient profile;
- the analyzer (35) is further configured for analyzing whether the item of the recipient profile satisfies the at least one criterion of the traced user requirement list;
- the service initiator is configured for permitting the first service to be provided only if the item of the recipient profile also satisfies the at least one criterion of the user requi rement list.

11. The server system according to claim 10, wherein the system(1) comprises a login module (32) for receiving login data and the tracer (34) is configured for tracing the user requirement list on the basis of the login data or on the basis of a user identifier received from a device (2B, 2D) of the recipient.

12. The server system (1) accordi ng to claim 11, wherein the server system(1) is configured for permitting or denying servi ce for at least the first servi ce and a second servi ce and the servi ce initiator is configured for denying the servi ce initiation of the first service and the second service if the item of the user profile does not satisfy the at least one criterion of the recipient requirement list.

13. The server system (1) according to claim 12, wherein the server system (1) has access to a user requi rement list of the user and a recipient profile of the recipient and wherein the user requirement list comprises at least one criterion relating to an item of the recipient profile, wherein the service initiator is configured for permitting service of the first service and the second service only if the item of the recipient profile also satisfies the at least one criterion of the user requirement list.

14. The server system (1) according to one or more of the claim 9-13, wherein the item of the profiles comprise verified items and unverified items, optionally, the system (1) corrpri ses a verification indication receiver configured for receiving and processing a verification indication from at least one of a device (2A, 2C) of the user and a device (2B, 2D) of the recipient, the verification indication indicating that the at least one criterion of the requirement list relates to a verified item of the profile.

15. The server system (1) according to one or more of the claims 9-14, wherein one or more of the items are prevented from checki ng, the system (1) optionally corrprising a checking prevention indication receiver (37) configured for receiving and processing a checking prevention indication from at least one of a device (2A, 2C) of the user and a device (2B, 2D) of the recipient, the checking prevention indication indicating that one or more items of the profile are prevented from checki ng by the analyser (35), the system(1) further optionally corrprising a notification transmitter (38) configured for transmitting a notification request to a device (2A, 2B, 2C, 2D) of the user or recipient for whom a checki ng prevention indication applies, the notification request presenting an option to ignore the checki ng prevention indication to permit checking of the at least one item against a corresponding criterion of a requirement list.

## Patentansprüche

1. Verfahren zur Bereitstellung eines durch eine erste Dienstkennung identifizierten ersten Dienstes für einen Benutzer mit Hilfe eines Serversystems (1), das zur Verbindung mit einem Benutzergerät (2A, 2C) des Benutzers konfiguriert ist,
**dadurch gekennzeichnet, dass**
das Serversystem (1) Zugriff auf eine Datenbank (23) hat, die mindestens aufweist:
eine erste Dienstkontaktkennung eines Empfängers, die zur Bereitstellung des ersten Dienstes für den Benutzer auf eine Weise erforderlich ist, die den Empfänger einbezieht, wobei der Empfänger nicht der Benutzer ist;
eine zweite Dienstkontaktkennung des Empfängers, die zur Bereitstellung eines zweiten Dienstes für den Benutzer auf eine Weise erforderlich ist, die den Empfänger einbezieht, wobei sich die zweite Dienstkontaktkennung von der ersten Dienstkontaktkennung unterscheidet,
wobei das Verfahren die Schritte aufweist:
Empfangen der ersten Dienstkennung vom Benutzergerät (2A, 2C) des Benutzers;
Empfangen der zweiten Dienstkontaktkennung des Empfängers vom Benutzergerät (2A, 2C) des Benutzers;
Abrufen der ersten Dienstkontaktkennung des Empfängers aus der Datenbank (23) in Abhängigkeit von der empfangenen ersten Dienstkennung und der empfangenen zweiten Dienstkontaktkennung,
wobei das Serversystem (1) ferner Zugriff auf eine Empfängeranforderungsliste des Empfängers und ein Benutzerprofil des Benutzers hat, wobei die Empfängeranforderungsliste mindestens ein Kriterium hinsichtlich einer Spam-bezogenen Position des Benutzerprofils aufweist,
wobei das Verfahren ferner die Schritte aufweist:
Verfolgen der Empfängeranforderungsliste auf der Grundlage der empfangenen ersten Dienstkontaktkennung und/oder der empfangenen zweiten Dienstkontaktkennung;
Prüfen, ob die Spam-bezogene Position des Benutzerprofils das Kriterium der Empfängeranforderungsliste erfüllt; und
Erlauben, dass der erste Dienst für den Benutzer auf eine Weise bereitgestellt wird, die den Empfänger einbezieht, wenn die Spam-bezogene Position des Benutzerprofils das Kriterium der Empfängeranforderungsliste erfüllt; und
Verweigern, dass der erste Dienst für den Benutzer auf eine Weise bereitgestellt wird, die den Empfänger einbezieht, wenn die Spam-bezogene Position des Benutzerprofils nicht das Kriterium der Empfängeranforderungsliste erfüllt.

2. Verfahren nach Anspruch 1, wobei das Serversystem (1) Zugriff auf eine Benutzeranforderungsliste des Benutzers und ein Empfängerprofil des Empfängers hat und wobei die Benutzeranforderungsliste mindestens ein Kriterium aufweist, das sich auf eine Position des Empfängerprofils bezieht, wobei das Verfahren ferner die Schritte aufweist:
Verfolgen der Benutzeranforderungsliste;
Prüfen, ob die Position des Empfängerprofils das mindestens eine Kriterium der verfolgten Benutzeranforderungsliste erfüllt;
Erlauben, dass der erste Dienst bereitgestellt wird, nur wenn die Position des Empfängerprofils auch das mindestens eine Kriterium der Benutzeranforderungsliste erfüllt.

3. Verfahren nach Anspruch 2, das ferner den Schritt aufweist: Verfolgen der Benutzeranforderungsliste auf der Grundlage von Login-Daten, die vom Benutzergerät (2A, 2C) empfangen werden, und/oder von einer Dienstkontaktkennung, die von einem Gerät (2B, 2D) des Empfängers empfangen wird.

4. Verfahren nach einem der vorstehenden Ansprüche, wobei das Serversystem (1) zum Erlauben oder Verweigern von Dienst für mindestens einen ersten Dienst und einen zweiten Dienst konfiguriert ist, wobei das Verfahren den Schritt aufweist: Verweigern der Dienstinitiierung des ersten Dienstes und des zweiten Dienstes, wenn die Position des Benutzerprofils nicht das mindestens eine Kriterium der Empfängeranforderungsliste erfüllt.

5. Verfahren nach Anspruch 4, wobei das Serversystem (1) Zugriff auf eine Benutzeranforderungsliste des Benutzers und ein Empfängerprofil des Empfängers hat und wobei die Benutzeranforderungsliste mindestens ein Kriterium aufweist, das sich auf eine Position des Empfängerprofils bezieht, wobei das Verfahren ferner die Schritte aufweist:
Verfolgen der Benutzeranforderungsliste;
Prüfen, ob die Position des Empfängerprofils das mindestens eine Kriterium der verfolgten Benutzeranforderungsliste erfüllt;
Erlauben von Dienst des ersten Dienstes und des zweiten Dienstes, nur wenn die Position des Empfängerprofils auch das mindestens eine Kriterium der Benutzeranforderungsliste erfüllt.

6. Verfahren nach einem der vorstehenden Ansprüche, wobei die Positionen des (der) Profils (Profile) bestätigte Positionen und unbestätigte Positionen aufweisen und wobei optional das Serversystem von einem Gerät (2A, 2C) des Benutzers und/oder einem Gerät (2B, 2D) des Empfängers eine Bestätigungsangabe empfängt, dass sich das mindestens eine Kriterium der Anforderungsliste auf eine bestätigte Position oder eine unbestätigte Position des Profils bezieht.

7. Verfahren nach einem der vorstehenden Ansprüche, wobei verhindert wird, dass eine oder mehrere der Positionen geprüft werden, und wobei optional das Serversystem (1) von einem Gerät (2A, 2C) des Benutzers und/oder einem Gerät (2B, 2D) des Empfängers eine Prüfverhinderungsangabe empfängt, die angibt, dass verhindert wird, dass eine oder mehrere Positionen des Profils geprüft werden, und das optional den Schritt aufweist: Senden einer Meldungsanforderung zu einem Gerät des Benutzers oder Empfängers, für den eine Prüfverhinderungsangabe gilt, wobei die Meldungsanforderung eine Option bietet, die Prüfverhinderungsangabe zu ignorieren, um das Prüfen der mindestens einen Position anhand eines entsprechenden Kriteriums einer Anforderungsliste zu erlauben.

8. Träger (21), der ein Computerprogramm mit Softwarecodeabschnitten enthält, die bei Installation auf einem elektronischen System und Ausführung durch dieses geeignet sind, das Verfahren nach Anspruch 1 bis 7 durchzuführen.

9. Serversystem (1), das zur Bereitstellung eines durch eine erste Dienstkennung identifizierten ersten Dienstes für einen Benutzer konfiguriert ist, wobei das Serversystem (1) zur Verbindung mit einem Benutzergerät (2A, 2C) des Benutzers konfiguriert ist,
**dadurch gekennzeichnet, dass**
das Serversystem aufweist:
eine Datenbank (23), die mindestens aufweist: eine erste Dienstkontaktkennung eines Empfängers, die zur Bereitstellung des ersten Dienstes für den Benutzer auf eine Weise erforderlich ist, die den Empfänger einbezieht, wobei der Empfänger nicht der Benutzer ist, eine zweite Dienstkontaktkennung des Empfängers, die zur Bereitstellung eines zweiten Dienstes für den Benutzer auf eine Weise erforderlich ist, die den Empfänger einbezieht, wobei der erste Dienst durch eine erste Dienstkennung identifiziert ist und wobei die erste Dienstkontaktkennung und die zweite Dienstkontaktkennung unterschiedliche Dienstkontaktkennungen sind;
ein Empfangselement (24), das zum Empfangen der ersten Dienstkennung und der zweiten Dienstkontaktkennung des Empfängers vom Benutzergerät des Benutzers konfiguriert ist; und
ein Abrufmodul (25), das zum Abrufen der ersten Dienstkontaktkennung aus der Datenbank (23) in Abhängigkeit von der empfangenen ersten Dienstkennung und der empfangenen zweiten Dienstkontaktkennung konfiguriert ist;
einen Verfolger (34), der zum Verfolgen einer Empfängeranforderungsliste des Empfängers auf der Grundlage der abgerufenen ersten Dienstkontaktkennung und/oder der empfangenen zweiten Dienstkontaktkennung konfiguriert ist, wobei die Empfängeranforderungsliste mindestens ein Kriterium hinsichtlich einer Spam-bezogenen Position eines Benutzerprofils aufweist;
einen Analysator (35), der zum Analysieren konfiguriert ist, ob die Spam-bezogene Position des Benutzerprofils das mindestens eine Kriterium der verfolgten Empfängeranforderungsliste erfüllt; und
einen Dienstinitiator, der zum Erlauben konfiguriert ist, dass der erste Dienst für den Benutzer auf eine Weise bereitgestellt wird, die den Empfänger einbezieht, wenn die Spam-bezogene Position des Benutzerprofils das Kriterium der Empfängeranforderungsliste erfüllt;
einen Dienstverweigerer, der zum Verweigern konfiguriert ist, dass der erste Dienst für den Benutzer auf eine Weise bereitgestellt wird, die den Empfänger einbezieht, wenn die Spam-bezogene Position des Benutzerprofils nicht das Kriterium der Empfängeranforderungsliste erfüllt.

10. Serversystem (1) nach Anspruch 9, wobei:
der Verfolger (34) ferner zum Verfolgen einer Benutzeranforderungsliste des Benutzers und eines Empfängerprofils des Empfängers konfiguriert ist, wobei die Benutzeranforderungsliste mindestens ein Kriterium aufweist, das sich auf eine Position des Empfängerprofils bezieht;
der Analysator (35) ferner zum Analysieren konfiguriert ist, ob die Position des Empfängerprofils das mindestens eine Kriterium der verfolgten Benutzeranforderungsliste erfüllt;
der Dienstinitiator zum Erlauben konfiguriert ist, dass der erste Dienst bereitgestellt wird, nur wenn die Position des Empfängerprofils auch das mindestens eine Kriterium der Benutzeranforderungsliste erfüllt.

11. Serversystem nach Anspruch 10, wobei das System (1) ein Login-Modul (32) zum Empfangen von Login-Daten aufweist und der Verfolger (34) zum Verfolgen der Benutzeranforderungsliste auf der Grundlage der Login-Daten oder auf der Grundlage einer Benutzerkennung konfiguriert ist, die von einem Gerät (2B, 2D) des Empfängers empfangen wird.

12. Serversystem (1) nach Anspruch 11, wobei das Serversystem (1) zum Erlauben oder Verweigern von Dienst für mindestens den ersten Dienst und einen zweiten Dienst konfiguriert ist und der Dienstinitiator zum Verweigern der Dienstinitiierung des ersten Dienstes und des zweiten Dienstes konfiguriert ist, wenn die Position des Benutzerprofils nicht das mindestens eine Kriterium der Empfängeranforderungsliste erfüllt.

13. Serversystem (1) nach Anspruch 12, wobei das Serversystem (1) Zugriff auf eine Benutzeranforderungsliste des Benutzers und ein Empfängerprofil des Empfängers hat und wobei die Benutzeranforderungsliste mindestens ein Kriterium aufweist, das sich auf eine Position des Empfängerprofils bezieht, wobei der Dienstinitiator zum Erlauben von Dienst des ersten Dienstes und des zweiten Dienstes konfiguriert ist, nur wenn die Position des Empfängerprofils auch das mindestens eine Kriterium der Benutzeranforderungsliste erfüllt.

14. Serversystem (1) nach einem der Ansprüche 9 bis 13, wobei die Positionen der Profile bestätigte Positionen und unbestätigte Positionen aufweisen, optional das System (1) ein Bestätigungsangabe-Empfangselement aufweist, das zum Empfangen und Verarbeiten einer Bestätigungsangabe von einem Gerät (2A, 2C) des Benutzers und/oder einem Gerät (2B, 2D) des Empfängers konfiguriert ist, wobei die Bestätigungsangabe angibt, dass sich das mindestens eine Kriterium der Anforderungsliste auf eine bestätigte Position des Profils bezieht.

15. Serversystem (1) nach einem der Ansprüche 9 bis 14, wobei verhindert wird, dass eine oder mehrere Positionen geprüft werden, wobei das System (1) optional ein Prüfverhinderungsangabe-Empfangselement (37) aufweist, das zum Empfangen und Verarbeiten einer Prüfverhinderungsangabe von einem Gerät (2A, 2C) des Benutzers und/oder einem Gerät (2B, 2D) des Empfängers konfiguriert ist, die Prüfverhinderungsangabe angibt, dass verhindert wird, dass eine oder mehrere Positionen des Profils durch den Analysator (35) geprüft werden, das System (1) ferner optional einen Meldungssender (38) aufweist, der zum Senden einer Meldungsanforderung zu einem Gerät (2A, 2B, 2C, 2D) des Benutzers oder Empfängers konfiguriert ist, für den eine Prüfverhinderungsangabe gilt, die Meldungsanforderung eine Option bietet, um die Prüfverhinderungsangabe zu ignorieren, um das Prüfen der mindestens einen Position anhand eines entsprechenden Kriteriums einer Anforderungsliste zu erlauben.

## Revendications

1. Procédé de fourniture d'un premier service identifié par un premier identifiant de service à un utilisateur à l'aide d'un système de serveur (1) configuré pour se connecter à un dispositif utilisateur (2A, 2C) de l'utilisateur,
**caractérisé par**
le système de serveur (1) ayant accès à une base de données (23) comprenant au moins :
- un premier identifiant de contact de service d'un destinataire requis pour fournir le premier service à l'utilisateur d'une manière impliquant le destinataire, le destinataire n'étant pas l'utilisateur ;
- un second identifiant de contact de service du destinataire requis pour fournir un second service à l'utilisateur d'une manière impliquant le destinataire, le second identifiant de contact de service étant différent du premier identifiant de contact de service,
le procédé comprenant les étapes de :
- réception du premier identifiant de service en provenance du dispositif utilisateur (2A, 2C) de l'utilisateur,
- réception du second identifiant de contact de service du destinataire en provenance du dispositif utilisateur (2A, 2C) de l'utilisateur ;
- récupération du premier identifiant de contact de service du destinataire dans la base de données (23) selon le premier identifiant de service reçu et le second identifiant de contact de service reçu,
dans lequel le système de serveur (1) a en outre accès à une liste d'exigences de destinataire du destinataire et à un profil utilisateur de l'utilisateur, la liste d'exigences de destinataire comprenant au moins un critère concernant un élément lié à un pourriel du profil utilisateur,
le procédé comprenant en outre les étapes de :
- traçage de la liste d'exigences de destinataire sur la base d'au moins l'un du premier identifiant de contact de service récupéré et du second identifiant de contact de service reçu ;
- vérification si l'élément lié à un pourriel du profil utilisateur satisfait le critère de la liste d'exigences de destinataire ; et
- autorisation de fourniture du premier service à l'utilisateur d'une manière impliquant le destinataire si l'élément lié à un pourriel du profil utilisateur satisfait le critère de la liste d'exigences de destinataire et
- refus de fourniture du premier service à l'utilisateur d'une manière impliquant le destinataire si l'élément lié à un pourriel du profil utilisateur ne satisfait pas le critère de la liste d'exigences de destinataire.

2. Procédé selon la revendication 1, dans lequel le système de serveur (1) a accès à une liste d'exigences d'utilisateur de l'utilisateur et à un profil destinataire de destinataire et dans lequel la liste d'exigences d'utilisateur comprend au moins un critère lié à un élément du profil destinataire, le procédé comprenant en outre les étapes de :
- traçage de la liste d'exigences d'utilisateur ;
- vérification si l'élément du profil destinataire satisfait l'au moins un critère de la liste d'exigences d'utilisateur tracée ;
- autorisation de fourniture du premier service uniquement si l'élément du profil destinataire satisfait également l'au moins un critère de la liste d'exigences d'utilisateur.

3. Procédé selon la revendication 2, comprenant en outre l'étape de traçage de la liste d'exigences d'utilisateur sur la base d'au moins l'une de données d'ouverture de session reçues en provenance du dispositif utilisateur (2A, 2C) et d'un identifiant de contact de service reçu en provenance d'un dispositif (2B, 2D) du destinataire.

4. Procédé selon une ou plusieurs des revendications précédentes, dans lequel le système de serveur (1) est configuré pour autoriser ou refuser un service pour au moins un premier service et un second service, le procédé comprenant l'étape de refus de l'initiation de service du premier service et du second service si l'élément du profil utilisateur ne satisfait pas l'au moins un critère de la liste d'exigences de destinataire.

5. Procédé selon la revendication 4, dans lequel le système de serveur (1) a accès à une liste d'exigences d'utilisateur de l'utilisateur et à un profil destinataire du destinataire et dans lequel la liste d'exigences d'utilisateur comprend au moins un critère lié à un élément du profil destinataire, le procédé comprenant en outre les étapes de :
- traçage de la liste d'exigences d'utilisateur ;
- vérification si l'élément du profil destinataire satisfait l'au moins un critère de la liste d'exigences d'utilisateur tracée ;
- autorisation de service du premier service et du second service uniquement si l'élément du profil destinataire satisfait également l'au moins un critère de la liste d'exigences d'utilisateur.

6. Procédé selon une ou plusieurs des revendications précédentes, dans lequel les éléments du ou des profils comprennent des éléments vérifiés et des éléments non vérifiés, et dans lequel, facultativement, le système de serveur reçoit en provenance d'au moins l'un d'un dispositif (2A, 2C) de l'utilisateur et d'un dispositif (2B, 2D) du destinataire une indication de vérification selon laquelle l'au moins un critère de la liste d'exigences est lié à un élément vérifié ou à un élément non vérifié du profil.

7. Procédé selon une ou plusieurs des revendications précédentes, dans lequel un ou plusieurs des éléments sont impossibles à vérifier et dans lequel, facultativement, le système de serveur (1) reçoit en provenance d'au moins l'un d'un dispositif (2A, 2C) de l'utilisateur et d'un dispositif (2B, 2D) du destinataire une indication d'impossibilité de vérification indiquant qu'un ou plusieurs éléments du profil sont impossibles à vérifier, et comprenant facultativement l'étape de transmission d'une demande de notification à un dispositif de l'utilisateur ou du destinataire pour qui une indication d'impossibilité de vérification s'applique, la demande de notification présentant une option pour ignorer l'indication d'impossibilité de vérification afin d'autoriser une vérification de l'au moins un élément vis-à-vis d'un critère correspondant d'une liste d'exigences.

8. Porteuse (21) contenant un programme d'ordinateur comprenant des portions de code logiciel adaptées, lorsqu'elles sont installées et exécutées par un système électronique, pour réaliser le procédé selon les revendications 1 à 7.

9. Système de serveur (1) configuré pour fournir un premier service identifié par un premier identifiant de service à un utilisateur, dans lequel le système de serveur (1) est configuré pour se connecter à un dispositif utilisateur (2A, 2C) de l'utilisateur,
**caractérisé par**
le système de serveur (1) comprenant :
- une base de données (23) comprenant au moins un premier identifiant de contact de service d'un destinataire requis pour fournir le premier service à l'utilisateur d'une manière impliquant le destinataire, le destinataire n'étant pas l'utilisateur, un second identifiant de contact de service du destinataire requis pour fournir un second service à l'utilisateur d'une manière impliquant le destinataire, dans lequel le premier service est identifié par un premier identifiant de service et dans lequel le premier identifiant de contact de service et le second identifiant de contact de service sont des identifiants de contact de service différents ;
- un récepteur (24) configuré pour recevoir le premier identifiant de service et le second identifiant de contact de service du destinataire en provenance du dispositif utilisateur de l'utilisateur ; et
- un module de récupération (25) configuré pour récupérer le premier identifiant de contact de service dans la base de données (23) selon le premier identifiant de service reçu et le second identifiant de contact de service reçu ;
- un traceur (34) configuré pour tracer une liste d'exigences de destinataire du destinataire sur la base d'au moins l'un du premier identifiant de contact de service récupéré et du second identifiant de contact de service reçu, la liste d'exigences de destinataire comprenant au moins un critère concernant un élément lié à un pourriel d'un profil utilisateur ;
- un analyseur (35) configuré pour analyser si l'élément lié à un pourriel du profil utilisateur satisfait l'au moins un critère de la liste d'exigences de destinataire tracée ; et
- un initiateur de service configuré pour autoriser la fourniture du premier service à l'utilisateur d'une manière impliquant le destinataire si l'élément lié à un pourriel du profil utilisateur satisfait le critère de la liste d'exigences de destinataire ;
- un dispositif de refus de service configuré pour refuser la fourniture du premier service à l'utilisateur d'une manière impliquant le destinataire si l'élément lié à un pourriel du profil utilisateur ne satisfait pas le critère de la liste d'exigences de destinataire.

10. Système de serveur (1) selon la revendication 9, dans lequel :
- le traceur (34) est en outre configuré pour tracer une liste d'exigences d'utilisateur de l'utilisateur et un profil destinataire du destinataire, la liste d'exigences d'utilisateur comprenant au moins un critère lié à un élément du profil destinataire ;
- l'analyseur (35) est en outre configuré pour analyser si l'élément du profil destinataire satisfait l'au moins un critère de la liste d'exigences d'utilisateur tracée ;
- l'initiateur de service est configuré pour autoriser la fourniture du premier service uniquement si l'élément du profil destinataire satisfait également l'au moins un critère de la liste d'exigences d'utilisateur.

11. Système de serveur selon la revendication 10, dans lequel le système (1) comprend un module d'ouverture de session (32) pour recevoir des données d'ouverture de session et le traceur (34) est configuré pour tracer la liste d'exigences d'utilisateur sur la base des données d'ouverture de session ou sur la base d'un identifiant utilisateur reçu en provenance d'un dispositif (2B, 2D) du destinataire.

12. Système de serveur (1) selon la revendication 11, dans lequel le système de serveur (1) est configuré pour autoriser ou refuser un service pour au moins le premier service et un second service, et l'initiateur de service est configuré pour refuser l'initiation de service du premier service et du second service si l'élément du profil utilisateur ne satisfait pas l'au moins un critère de la liste d'exigences de destinataire.

13. Système de serveur (1) selon la revendication 12, dans lequel le système de serveur (1) a accès à une liste d'exigences d'utilisateur de l'utilisateur et à un profil destinataire du destinataire et dans lequel la liste d'exigences d'utilisateur comprend au moins un critère lié à un élément du profil destinataire, dans lequel l'initiateur de service est configuré pour autoriser un service du premier service et du second service uniquement si l'élément du profil destinataire satisfait également l'au moins un critère de la liste d'exigences d'utilisateur.

14. Système de serveur (1) selon une ou plusieurs des revendications 9 à 13, dans lequel les éléments des profils comprennent des éléments vérifiés et des éléments non vérifiés, facultativement, le système (1) comprend un récepteur d'indication de vérification configuré pour recevoir et traiter une indication de vérification provenant d'au moins l'un d'un dispositif (2A, 2C) de l'utilisateur et d'un dispositif (2B, 2D) du destinataire, l'indication de vérification indiquant que l'au moins un critère de la liste d'exigences est lié à un élément vérifié du profil.

15. Système de serveur (1) selon une ou plusieurs des revendications 9 à 14, dans lequel un ou plusieurs des éléments sont impossibles à vérifier, le système (1) comprenant facultativement un récepteur d'indication d'impossibilité de vérification (37) configuré pour recevoir et traiter une indication d'impossibilité de vérification en provenance d'au moins l'un d'un dispositif (2A, 2C) de l'utilisateur et d'un dispositif (2B, 2D) du destinataire, l'indication d'impossibilité de vérification indiquant qu'un ou plusieurs éléments du profil sont impossibles à vérifier par l'analyseur (35), le système (1) comprenant en outre facultativement un transmetteur de notification (38) configuré pour transmettre une demande de notification à un dispositif (2A, 2B, 2C, 2D) de l'utilisateur ou du destinataire pour qui une indication d'impossibilité de vérification s'applique, la demande de notification présentant une option pour ignorer l'indication d'impossibilité de vérification afin d'autoriser la vérification de l'au moins un élément vis-à-vis d'un critère correspondant d'une liste d'exigences.
